# EUROPEAN PATENT SPECIFICATION

(11) **EP 1 541 012 B1**
(45) Date of publication and mention of the grant of the patent: **07.10.2015**
(21) Application number: 02760684.7
(22) Date of filing: 21.08.2002
(51) Int. Cl.: A01G 9/22, C08K 3/22, C08K 3/38, A01G 9/14

(54) **HEAT INSULATION MATERIAL FOR AGRICULTURAL AND HORTICULTURAL FACILITY**
WÄRMEISOLIERMATERIAL FÜR EINE LANDWIRTSCHAFTS- UND GARTENBAUEINRICHTUNG
MATERIAU CALORIFUGE DESTINE A DES INSTALLATIONS AGRICOLES ET HORTICOLES

(43) Date of publication of application: 15.06.2005
(73) Proprietor: SUMITOMO METAL MINING COMPANY LIMITED, Tokyo 105-8716 (JP)
(72) Inventor: TAKEDA, Hiromitsu c/o Central Research Laboratory, Ichikawa-shi, Chiba 272-8588 (JP)
(74) Representative: TBK
(86) International application number: PCT/JP2002/008424
(87) International publication number: WO 2004/017717

(56) References cited:
- EP-A1- 0 746 973
- JP-A- 9 151 203
- JP-A- 9 205 898
- JP-A- 10 139 489
- JP-A- 63 199 266

## Description

### TECHNICAL FIELD

The present invention relates to materials in the form of a film or a board for use as roofing materials, outer wall materials and so on in agricultural and horticultural houses. More particularly, the invention relates to a heat shielding material adapted for as an agricultural and horticultural facility and having a heat shielding effect.

### BACKGROUND ART

In conventional practice, resin films and resin plates have been used as materials for roofs, outer walls, etc., in agricultural and horticultural facilities including houses. Resins used for this purpose are typified by vinyl chloride resin, polyethylene resin, polyester resin, fluorine resin, etc. Recently, fluorine resin has enjoyed a good reputation for its excellent weather resistance, light transmittance in an ultraviolet region, etc.

Most of the materials used as a roofing material, an outer wall material, etc., in an agricultural and horticultural facility are designed to keep the facility warm indoors. The goal of maintaining warmth in the facility, however, can be almost fully realized by blocking ambient air from entering the facility. But then, since the temperature inside the facility becomes too high except in winter, it is necessary for the temperature to be controlled by opening and closing portions of the roof and outer wall of the facility.

Thus, there is a growing demand, as made by agricultural and horticultural producers, for a material which is capable of exerting a heat shielding property and is useful as a roofing material, an outer wall material, etc., in an agricultural and horticultural facility. Currently, however, film- or board-like materials are rarely provided in which such a property has been considered.

In the meantime, Japanese Patent Laid-Open No. 9-330612 proposes that, for use in members of office automation equipment, a near-infrared absorbable coloring matter be added to a resin so as to impart a heat shielding property thereto. Additionally, Japanese Patent Laid-Open No. 6-118228 proposes, for use in optical filters, a heat shielding resin containing copper ions.

However, the coloring matter and copper proposed in the above-cited publications are so poor in weather resistance that they are liable to degrade on account of ultraviolet rays, heat or the like. In the case where a resin after being incorporated with the coloring matter or copper is used as a heat shielding material, the resin poses the disadvantage that its heat shielding effect becomes prematurely degraded upon long-term outdoor exposure. The use of the coloring matter is also defective in that bleeding tends to occur and leads to whitening on the resin surface, resulting in sharp lowering of light transmittance. Consequently, a resin film and the like containing the coloring matter or copper ions are difficult to use, over a long period of time, especially as materials for an agricultural and horticultural facility.

With the foregoing conventional situation in mind, it is an object of the present invention to provide a heat shielding material for use in an agricultural and horticultural facility, which is in the form of a film or a board and is useful as a roofing material, an outer wall material, etc., in an agricultural and horticultural house, and which is not only excellent in weather resistance, but also capable of screening near-infrared light efficiently and hence exerting a heat shielding property, while required brightness is being maintained with visible light transmitted because of the transmittance of visible light.

EP-A-0 746 973 discloses an agricultural covering material comprising a fluroresin film which intercepts at least 40 percent of transmission of ultraviolet rays, having a wavelength in the range of at least 300 to 330 nm, and transmits at least 70 percent of visible rays in the range of 400 to 800 nm. Inorganic fine powder can be compounded into the fluororesin and is appropriately selected from oxides, compound oxides, sulfides, carbonates etc. of metals such as titanium, zirconium, magnesium, calcium, barium, lanthanum, zinc, aluminum, tin, antimony etc. The covering material can be spread outdoors over a long period of time, and is useful for cultivation of various useful crops as a covering material for use with hothouses to replace glass.

### DISCLOSURE OF THE INVENTION

Specifically, the heat shielding material for use in an agricultural and horticultural facility according to the present invention comprises a heat shielding layer comprising a base resin, and a heat shielding filler in the form of microparticles dispersed in the base resin. The heat shielding filler is at least one selected from lanthanum hexaboride and antimony-doped tin oxide.

The heat shielding material for use in an agricultural and horticultural facility according to the invention is disclosed in claim 1.

Additionally, the heat shielding material for use in an agricultural and horticultural facility according to the invention is disclosed in claim 2.

Here, the transmittance values of various types of light relating to this invention and described above represent those obtained by measurement in accordance with JIS A 5759 (1998) (light source: light A) and by subsequent calculation of the measurements, which standard prescribes films for building windowpanes. However, test specimens to be measured herein were used as they were like a film or a board without attachment to glass. The solar radiation transmittance was given as indicating the transmittance of light in a wavelength band ranging from 350 to 2100 nm, and in this invention, it was used as a reference index when the heat shielding material for use in an agricultural and horticultural facility to be evaluated as to its heat shielding property when contrasted to sunrays. Likewise, the visible light transmittance was given as indicating the transmittance of light in a wavelength band ranging from 380 to 780 nm, and it was used as a reference index when brightness was evaluated as seen through the eye.

### BRIEF DESCRIPTION OF THE DRAWINGS

Fig. 1 is a graphic representation showing transmittance spectra of LaB₆ microparticles-dispersed films (two films are illustrated which vary in the content of microparticles based on 1 m², and an upper profile denotes a transmittance spectrum of a film having a smaller content of microparticles).
Fig. 2 is a graphic representation showing transmittance spectra of ATO microparticles-dispersed films (two films are illustrated which vary in the content of microparticles based on 1 m², and an upper profile denotes a transmittance spectrum of a film having a smaller content of microparticles).

### BEST MODE FOR PRACTICING THE INVENTION

The present invention will now be described below in greater detail.

First, the heat shielding material for use in an agricultural and horticultural facility according to the invention takes the form of a film or a board (a plate) adapted for use as a roofing material, an outer wall material, etc., in an agricultural and horticultural house, and this material comprises a heat shielding layer comprising a base resin, and a heat shielding filler in the form of microparticles dispersed in the base resin. In particular, as the heat shielding filler, either one or both of lanthanum hexaboride (LaB₆) and antimony-doped tin oxide (SnO₂ + Sb₂O₅; hereinafter referred to simply as ATO) is used which can absorb near-infrared light efficiently and hence impart an excellent heat shielding property.

In a heat shielding material for use in an agricultural and horticultural facility, a sort of heat targeted for shielding is heat energy derived from sunrays. The sunrays reaching the ground level are said to lie generally in a wavelength band of about 290 to 2100 nm, among which light converged in a visible light wavelength band of about 380 to 780 nm is required to keep brightness in the facility and to grow plants. In order to shield heat from the sunrays, therefore, it is preferred that a material be chosen which is capable of selective and efficient absorption of near-infrared light of about 780 to 2100 nm and hence of making contributions to a heat shielding property.

Meanwhile, as regards light in an ultraviolet region, a wavelength band of 290 to 320 nm must usually be controlled although optimum cultivation conditions exist depending upon the breed of plants to be cultivated, the species of insects to be used for pollination, etc. In other words, this is because damage caused by noxious insects and plant diseases can be effectively inhibited by screening an appropriate quantity of ultraviolet rays in the above wavelength band. Many of the conventional agricultural films may screen ultraviolet rays up to a certain point, and therefore, plants bred under such conditions do not need a lot of ultraviolet rays when grown. However, it is not desirable to screen a majority of ultraviolet rays because active pollination by insects such as honeybees or the like cannot be accomplished, or plant growth is impaired.

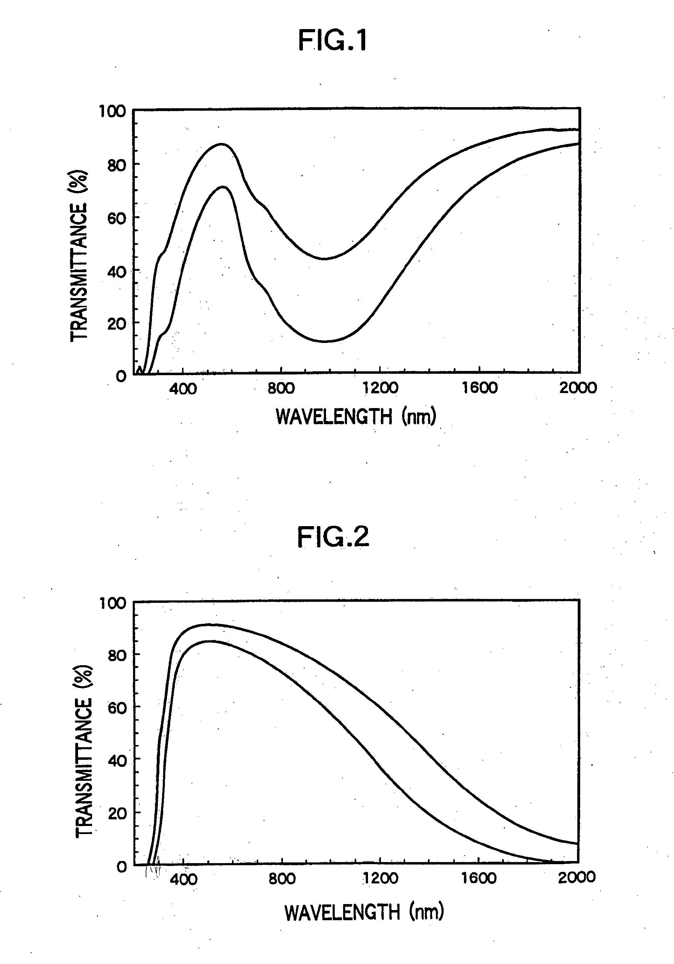

As shown in Fig. 1, each transmittance spectrum of a film, which has the LaB₆ microparticles dispersed therein, has a high transmittance with respect to the light in a visible light region and has a transmittance peak in the vicinity of a wavelength of 550 nm. This transmittance peak is favorable in holding brightness inside the facility since it is comparable to the wavelength at which the eye sensitivity to light is maximal. Further, a high absorption seen in the vicinity of a wavelength of 1000 nm makes it clear that near-infrared light can be efficiently absorbed in such a degree as to efficiently shield heat energy induced from sunrays. Additionally, LaB₆ is less likely to absorb ultraviolet rays and does not adversely affect pollination by insects and growth of plants. The tendency for ultraviolet rays at a wavelength of 290 to 320 nm to transmit can be controlled by adjusting the amount of LaB₆ microparticles to be added to a base resin.

When the transmittance in an ultraviolet region must be further controlled, ultraviolet-screening inorganic materials, organic materials, or organic/inorganic composite materials, such as cerium oxide, titanium oxide, zirconium oxide, zinc oxide, benzophenone type ultraviolet absorbers and so on may be added to fulfill the intended objective. Here, an ultraviolet absorber of the above-listed inorganic material type develops, when absorbing ultraviolet rays, electrons and holes on the surface which would result in degradation of the corresponding base resin. It is thus desired to use such an ultraviolet absorber having undergone coating treatment on the surface. The surface coating treatment typically includes a variety of coupling agents, surface modifiers, sol/gel silicates, etc., whereas the method of surface coating is not limited if it is effective in preventing the resin from being deteriorated.

As just described, the heat shielding material of the present invention, in which the LaB₆ microparticles have been used as the heat shielding filler, is capable of sufficiently absorbing a near-infrared region of sunrays, exerting a heat shielding property, and at the same time, is sufficient for transmitting a visible light region around the vicinity of a wavelength of 550 nm, holding sufficient brightness in the facility. Still favorably, the heat shielding material is uniquely capable of transmitting ultraviolet rays at a wavelength of not greater than 320 nm so that pollinating honeybees and so on are permitted to work actively, and stable harvests are expected.

In addition, the transmittance spectra of a film having the ATO microparticles dispersed therein are shown in Fig. 2. As is clear from Fig. 2, this film indicates a transmittance profile with a high transmittance at a wavelength of 380 to 780 nm in a visible light region and a flat one. The film is virtually free from absorbing a visible light region and is capable of holding brightness in the facility. Simultaneously, it has an absorbance at a wavelength of not smaller than 800 nm in a near-infrared region, thus affording a high level of heat shielding effect. Moreover, the film affords a transmittance at a wavelength of 290 to 320 nm in an ultraviolet region and does not nearly have adverse effects on honeybees and the like working for pollination.

Also in the case of ATO as described above in connection with LaB₆, ultraviolet-screening inorganic materials, organic materials and organic/inorganic composite materials may be added to control the transmittance in an ultraviolet region, and surface coating treatment may be desired to be performed for an ultraviolet absorber of an inorganic material type to prevent a base resin from being deteriorated.

As just described, the heat shielding material of this invention, in which the ATO microparticles have been used as the heat shielding filler, is colorless and transparent in a visible light region so that it holds sufficient brightness in the facility. Moreover, it is capable of absorbing a near-infrared region so that it achieves a high level of heat shielding effect, coupled with a transmittance in an ultraviolet region.

Additionally, as the heat shielding filler, LaB₆ and ATO can be used in combination, and the combined use provides a heat shielding material having a heat shielding property with greater effectiveness. More specifically, as seen in Figs. 1 and 2, LaB₆ has a higher absorption in the vicinity of a wavelength of 1000 nm, while ATO shows a gradual increase in absorption at a wavelength of 800 nm or above. Therefore, when both types of the microparticles are dispersed in a base resin, the absorption in a near-infrared region is made higher and more efficient so that a heat shielding property is obtained at a higher level than that obtained in the instance where either one type of the microparticles is used.

Thus, the heat shielding material for use in an agricultural and horticultural facility according to the present invention, in which LaB₆ and/or ATO are contained as the heat shielding filler, has three simultaneous characteristics; that is, one is the transmittance in a visible light region as required to hold desired brightness, another is the absorption in a near-infrared region as required to exert heat shielding effect at a high level, and yet another is the transmittance in an ultraviolet region. And so, this heat shielding material is significantly useful as a roofing material, an outer wall material, etc., in an agricultural and horticultural facility such as a house or the like. In addition, since such heat shielding fillers are composed of an inorganic material, greater weather resistance is obtained than those made up of an organic material. These fillers are advantageous especially for application to a heat shielding material usually used outdoors for an agricultural and horticultural facility.

In the heat shielding material for use in an agricultural and horticultural facility according to the present invention, it is important that, from optical points of view, a good balance be achieved between the transmittance in a visible light region and the absorption in a near-infrared region. Namely, the visible light transmittance is in the range of 60 to 90%, and simultaneously, the solar radiation transmittance is in the range of 10 to 80%, more preferably 10 to 70%. As to the light transmittance in an ultraviolet region, the light transmittance at a wavelength of 320 nm is in the range of 5 to 80%, and the light transmittance at a wavelength of 290 nm is in the range of 3.4% to 70%.

The particle diameter of the above-noted heat shielding filler in the form of microparticles (agglomerated particles being also included) may be chosen at will depending upon whether light scattering effect is utilized. For example, if the particle diameter of the heat shielding filler dispersed in a base resin for the heat shielding layer is not more than 200 nm, particularly not more than 100 nm, sunrays scatter extremely rarely and arrive directly at plants and ground level. Further, since the light in a visible region is scarcely scattered, the indoor condition in the facility such as a house or the like can be easily observed from the outside, and inversely, the outdoor surrounding condition can also be observed from the inside of the facility.

On the other hand, if the particle diameter of the microparticles dispersed in the heat shielding layer exceeds 200 nm, sunrays scatter vigorously. Thus, as the light reaching the plants and the ground in the facility becomes uniformly converged, the plants are little affected by the shadows cast from the frames of a house and so on. However, as the light in a visible light region scatters simultaneously, the indoor condition of the facility becomes difficult to observe clearly from the outside even though the facility can be held bright indoors as required.

The particle diameters of LaB₆ and ATO can be controlled by numerous methods. In reducing the particle diameter, medium stirring milling, ultrasonic treatment, impact pulverization, pH control and so forth are available. To comply with the intended application, a choice may be made as to which of the above methods should be used and as to which of the dry and wet processes and so on should be used. Particularly, when microparticles of not more than 200 nm in particle diameter are dispersed, a variety of coupling agents, dispersing agents and surface active agents may be used to disperse the microparticles in a stable state and to hold stable the dispersed particles after treatment.

In the heat shielding material for use in an agricultural and horticultural facility according to the present invention, which comprises a heat shielding layer comprising a base resin, and microparticles of LaB₆ and/or ATO dispersed in the base resin, the form is the one in which the conventional material has been used as a roofing material and an outer wall material in an agricultural house or the like; that is, the form is like a film or a board (a plate). Typically, the form is of a single film or a single board structured with the heat shielding layer alone. In the alternative, the form may be of a structure in which at least one heat shielding layer has been laminated on one surface of a matrix material like a transparent film or a board formed from resin, glass or the like and prepared separately, or of a structure in which the heat shielding layer has been interposed between such two matrix materials.

In the heat shielding material for use in an agricultural and horticultural facility, which is used in such various forms, the heat shielding layer can be formed by incorporating, as the heat shielding filler, the microparticles of LaB₆ and/or ATO into a resin, and by molding the resulting mixture. To incorporate the microparticles in the resin, the particle diameter of the microparticles may be controlled, where desired, by any of the methods stated above. Moreover, the microparticles of LaB₆ and ATO are thermally stable, and kneading may be effected at a temperature (appropriately 200 to 300°C) in the neighborhood of the melting point of the resin.

After being incorporate with the microparticles of LaB₆ and/or ATO, the resin is pelletized and then molded into a film-or board-like form, for example, by extrusion molding, inflation molding, solution casting molding or the like. Meanwhile, the thickness of a film or board to be formed may be optionally set to satisfy the intended application. Generally speaking, the film thickness is set preferably within the range of 10 to 1000 µm, preferably 20 to 500 µm, whereas the board thickness is set preferably within the range of 2 to 15 mm. Further, considering handling conveniences at the time of kneading and molding, the amounts of the microparticles of LaB₆ and/or ATO to be kneaded in the resin are usually preferably not more than 50 wt% based on the weight of the resin.

The content of the heat shielding filler uniformly dispersed in the heat shielding layer can be varied at will in conformity with the intended optical characteristics and heat shielding characteristics. For example, LaB₆ provides a high level of heat shielding efficiency per unit weight, thus achieving heat shielding effect with effectiveness at a content of not less than 0.01 g per 1 m² of the heat shielding layer. In the meantime, a 1 g/m² content enables sunray-induced heat energy to be absorbed by about 90%, and it is sufficiently effective in shielding heat in summer. A larger amount than this content is unfavorable in light of the effect of holding warmth in winter. Hence, the content of LaB₆ should be in the range of 0.01 to 1 g/m².

When the heat shielding filler is ATO, sunray-induced heat energy can be absorbed in the order of 30% at a content of about 3 g per 1 m² of the heat shielding layer. Generally, a content of less than 1.0 g/m² is not sufficient to obtain heat shielding effect, while a content exceeding 50 g/m² is objectionable as it causes the increase in cost as well as the difficulty in forming a heat shielding material. Hence, the content of ATO should be in the range of 1.0 to 50 g/m².

As to the heat shielding filler contents described above, all of the heat shielding filler contained in the heat shielding layer acts substantially equally on the incident light in the heat shielding layer. Evaluation can therefore be made on the basis of the filler content per 1 m² in the heat shielding layer, but without regard to the thickness of the heat shielding layer.

Resins used as a matrix for the heat shielding layer are not particularly limited, but may be chosen to accomplish the intended application. The resins include, for example, polyethylene resin, polyester resin and soft vinyl chloride resin which are in common use for a greenhouse or the like in the conventional art, as well as polyethylene terephthalate (PET) resin, acrylic resin, polyamide resin, vinyl chloride resin, polycarbonate resin, olefin resin, epoxy resin, polyimide resin, etc., all of which are less costly, greatly transparent and highly versatile. The PET resin in particular has uniquely characteristic transmittances in an ultraviolet region, and it transmits at a wavelength in the vicinity of 320 nm, but does not nearly transmit at a wavelength in the vicinity of 290 nm. Thus, PET is a resin material is favorable in controlling the transmittance in an ultraviolet region.

In the meantime, in the light of weather resistance, ultraviolet transmittance, etc., fluorine type resin is effective. Here, the fluorine type resin may be a resin containing fluorine in its molecular structure and includes, for example, ethylene tetrafluoride resin, ethylene trifluoride resin, ethylene difluoride resin, ethylene monofluoride resin, etc. Mixtures of these resins are also useful.

More specific examples include polytetrafluoroethylene (PTFE), tetrafluoroethylene-perfluoroalkylvinyl ether copolymer (PFA), tetrafluoroethylene-hexafluoropropylene copolymer (PEP), tetrafluoroethylene-hexafluoropropylene-perfluoroalkylvinyl ether copolymer (EPE), tetrafluoroethylene-ethylene copolymer (ETEF), polychlorotrifluoroethylene (CPTEF), chlorotrifluoroethylene-ethylene copolymer (ECTFE), polyvinylidene fluoride (PVDF), polyvinyl fluoride (PVF), etc. These fluorine-based resins, and their modified resins, composite resins and so forth are on the market and may be selected to meet the intended characteristics.

In addition, in the case of a heat shielding material for use in an agricultural and horticultural facility, which is of a laminated structure as described previously, the material can be produced, for example, by allowing a heat shielding layer containing microparticles of LaB₆ and/or ATO to coat on one or both surfaces of a matrix material made up of an existing resin film or resin board, an existing glass plate or the like. Any coating method may be used so long as it can form a uniform film on the matrix surface. For example, bar coating, gravure coating, spray coating, dip coating and so on are useful.

When a heat shielding layer is formed by using any of the above coating methods, it is preferred that an ultraviolet curing resin be used as a resin or binder for retaining the microparticles. Namely, an ultraviolet curing resin and a heat shielding filler with a proper particle diameter are mixed into a liquid or paste state and then coated on the surface of a matrix material. After removal of the solvent used by evaporation, curing is performed by means of ultraviolet light irradiation. Further, the use of a hard coating resin as an ultraviolet curing resin provides a heat shielding layer with a great level of surface abrasion strength; that is, a surface characteristic is obtained in which the heat shielding layer is less likely to cause any defect even upon hitting of dust, etc. At that time, an inorganic binder composed chiefly of SiO₂ and the like, fine particles of SiO₂ and so on may be added to further improve the surface abrasion strength.

To coat the heat shielding layer as stated above, it is desired that the matrix surface be treated to improve its adhesion to the heat shielding layer. Simultaneously with this surface treatment, the matrix surface is improved and made wettable so that repelling during the coating step is prevented to obtain uniform coating with ease. Surface treatment is desired to be performed particularly for a matrix material formed from fluorine type resin. As the method for surface treatment, corona treatment, sputter treatment, primer coating treatment and so on are well known.

Further, a heat shielding material for use in an agricultural and horticultural facility can be formed by laminating another matrix material over the above-described heat shielding layer already arranged on the heat shielding layer-coated matrix material, with the use of a given technique, such that the heat shielding layer is interposed between the two matrix materials. Alternatively, such a heat shielding material can be formed by sandwiching a preformed film- or board-like heat shielding layer between two matrix materials with the use of a given technique. In this case, a resin film-laminating resin such as, for example, vinyl chloride copolymer or the like may be used as a resin or binder for retaining the microparticles of a heat shielding filler.

And further, the microparticles of a heat shielding filler are mixed with a room temperature-curing resin, followed by coating of the mixture over the surfaces of a roof and an outer wall in an existing agricultural and horticultural facility. In this way, a heat shielding property may be imparted by post-coating treatment.

As just described above, it is possible to impart a heat shielding property to a matrix material by choice of a base resin to suit for the intended objective and application.

The present invention is described below in detail by giving its exemplary examples.

### [Example 1]

20 Parts by weight of LaB₆ microparticles (specific surface area: 30 m²/g), 75 parts by weight of toluene, and 5 parts by weight of a dispersing agent were mixed, followed by dispersion treatment of the mixture, thereby preparing a dispersion A with a dispersed particle diameter of 80 nm on average. Solvent components were relieved from this dispersion A at 50°C with a vacuum dryer, and dispersion-treated LaB₆ was taken as a particle A. The dispersed particle diameter on average was determined by measurement with a measuring apparatus designed to use a dynamic light scattering technique (manufactured by Ohtsuka Electronics Co., Ltd.: ELS-800) and then by averaging the measurements.

0.01 Kg of this particle A of LaB₆, and 8.7 kg of an ETFE (tetrafluoroethylene-ethylene copolymer) resin were dry-mixed in a V-blender. Then, internal mixing was thoroughly effected at 320°C, i.e., in the neighborhood of the melting temperature of the ETFE resin, followed by extrusion molding of the mixture at 320°C, thereby forming a film having a thickness of about 50 µm. The content of LaB₆ microparticles in this film is equal to 0.13 g/m².

As to the film-like heat shielding material thus obtained, optical measurements were made in accordance with JIS A 5759 (1998) (light source: light A) to determine the visible light transmittance, solar radiation transmittance and light transmittance in an ultraviolet region. Note that film-like test specimens to be measured were used as they were without attachment to glass. To evaluate the transparency, the haze value was also measured in accordance with JIS K 7105. As the haze value is lower, the higher transparency.

Accordingly, the above-described film-like heat shielding material reveals a visible light transmission of 70% and a solar radiation transmittance of 50%. It has now been found that the material can sufficiently transmit the light in a visible light region, and concurrently, can screen 50% of direct incident light from sunrays, thus achieving a high level of heat shielding effect. In addition, the transmittances in an ultraviolet region are 18% at a wavelength of 290 nm and 26% at a wavelength of 320 nm, and this range is sufficient to permit honeybees and the like to work actively for pollination. Further, the haze value is 4.2% which is comparable to so high a transparency that the indoor condition of the facility is fully observed even from the outside.

### [Comparative Example 1]

As in Example 1 except that the use of LaB₆ microparticles for the heat shielding filler was omitted, a film of about 50 µm in thickness was formed by extrusion molding of an ETFE resin. It has now been found that the resulting film reveals a visible light transmission of 89%, hence sufficiently transmitting the light in a visible light region, but reveals a solar radiation transmittance of also 89%, hence screening only about 11% of direct incident light from sunrays, thus suffering a poor level of heat shielding effect. In the meantime, the transmittances in an ultraviolet region are 82% at a wavelength of 290 nm and 88% at a wavelength of 320 nm, and the haze value is 4.0%.

### [Example 2]

0.005 Kg of the particle A of LaB₆ according to Example 1, and 8.7 kg of an ETFE resin were dry-mixed in a V-blender. Then, as in Example 1, internal mixing was thoroughly effected at 320°C, i.e., in the neighborhood of the melting temperature of the ETFE resin, followed by extrusion molding of the mixture at 320°C, thereby forming a film having a thickness of about 50 µm. The content of LaB₆ microparticles in this film is equal to 0.05 g/m².

The film-like heat shielding material thus obtained was evaluated as in Example 1. The material reveals a visible light transmission of 80% and a solar radiation transmittance of 65%. It has now been found that the material can sufficiently transmit the light in a visible light region, and concurrently, can screen 35% of direct incident light from sunrays, thus achieving a high level of heat shielding effect. The transmittances in an ultraviolet region are 34% at a wavelength of 290 nm and 43% at a wavelength of 320 nm, and this range is sufficient to permit honeybees and the like to work actively for pollination. Further, the haze value is 4.1% which is comparable to so high a transparency that the indoor condition of the facility is fully observed even from the outside.

### [Example 3]

As in Example 2 except that a PET (polyethylene terephthalate) resin was used in place of the ETFE resin, and the heating temperature was set at a temperature (about 300°C) at which the PET resin softened thoroughly, a film was formed by the same method as used in Example 2. The content of LaB₆ microparticles in this film is equal to 0.05 g/m² as is the case with Example 2.

The film-like heat shielding material thus obtained was evaluated as in Example 1. The material reveals a visible light transmission of 79% and a solar radiation transmittance of 65%. It has now been found that the material can sufficiently transmit the light in a visible light region, and concurrently, can screen 35% of direct incident light from sunrays, thus achieving a high level of heat shielding effect. In addition, the transmittances in an ultraviolet region are 0% at a wavelength of 290 nm and 35% at a wavelength of 320 nm. The transmittance of 0% read at 290 nm is attributable to the consequence of the PET resin used as the base resin. Further, the haze value is 2.5% from which transparency is found greatly high.

### [Comparative Example 2]

As in Example 3 except that the use of LaB₆ microparticles for the heat shielding filler was omitted, a film of about 50 µm in thickness was formed by extrusion molding of a PET resin. It has now been found that the resulting film reveals a visible light transmission of 88%, hence sufficiently transmitting light in a visible light region, but reveals a solar radiation transmittance of also 88%, hence screening only about 12% of direct incident light from sunrays, thus suffering a poor level of heat shielding effect. Additionally, the transmittances in an ultraviolet region are 0% at a wavelength of 290 nm and 52% at a wavelength of 320 nm, and the haze value is 1.0%.

### [Example 4]

20 Parts by weight of ATO microparticles (specific surface area: 50 m²/g), 75 parts by weight of toluene, and 5 parts by weight of a dispersing agent were mixed, followed by dispersion treatment of the mixture, thereby preparing a dispersion B with a dispersed particle diameter of 75 nm on average. Solvent components were relieved from this dispersion B at 50°C with a vacuum dryer, and dispersion-treated ATO was taken as a particle B.

0.4 Kg of this particle B of ATO, and 8.65 kg of an ETFE resin were dry-mixed in a V-blender. Then, internal mixing was thoroughly effected at 320°C, i.e., at the melting temperature of the ETFE resin, followed by extrusion molding of the mixture at 320°C, thereby forming a film having a thickness of about 50 µm. The content of ATO microparticles in this film is equal to 4.5 g/m².

The film-like heat shielding material thus obtained was evaluated as in Example 1. The material reveals a visible light transmission of 79% and a solar radiation transmittance of 63%. It has now been found that the material can sufficiently transmit the light in a visible light region, and concurrently, can screen 37% of direct incident light from sunrays, thus achieving a high level of heat shielding effect. In addition, the transmittances in an ultraviolet region are 3.4% at a wavelength of 290 nm and 30.0% at a wavelength of 320 nm, and this range is found sufficient to permit honeybees and the like to work actively for pollination. Further, the haze value is 4.5% which is comparable to so high a transparency that the indoor condition of the facility is fully observed even from the outside.

### [Example 5]

0.2 Kg of the particle B of ATO according to Example 4, and 8.65 kg of an ETFE resin were dry-mixed in a V-blender. Thereafter, internal mixing was thoroughly performed at 320°C, i.e., in the neighborhood of the melting temperature of the ETFE resin, followed by extrusion molding of the mixture at 320°C, thereby forming a film having a thickness of about 50 µm. The content of ATO microparticles in this film is equal to 2.0 g/m².

The film-like heat shielding material thus obtained was evaluated as in Example 1. The material reveals a visible light transmission of 84% and a solar radiation transmittance of 73%. It has now been found that the material can sufficiently transmit the light in a visible light region, and concurrently, can screen about 27% of direct incident light from sunrays, thus achieving a high level of heat shielding effect. Additionally, the transmittances in an ultraviolet region are 15% at a wavelength of 290 nm and 49% at a wavelength of 320 nm, and this range is sufficient to permit honeybees and the like to work actively for pollination. Further, the haze value is 4.2% which is comparable to so high a transparency that the indoor condition of the facility is fully observed even from the outside.

### [Example 6]

10 Parts by weight of the dispersion A of the LaB₆ microparticles according to Example 1 was mixed with 100 parts by weight of a hard-coating ultraviolet-curing resin (solid content: 100%). The resulting solution was coated, by using a bar coater, on a PET resin film corona-treated in advance on the surface and having a thickness of 50 µm, followed by drying of the coated film for 30 seconds at 100°C to evaporate the solvent. Then, curing was effected with a high-pressure mercury lamp, thereby forming a heat shielding layer on the PET resin film.

The film-like heat shielding material thus obtained is of a laminated structure constituted of a heat shielding layer comprising a hard-coating ultraviolet-curing resin, and LaB₆ microparticles dispersed in the ultraviolet-curing resin, and a matrix material, that is, a PET resin film on which the heat shielding layer has been coated. Moreover, the heat shielding layer of this film is about 2 µm in thickness, and the content of LaB₆ microparticles is equal to 0.08 g/m².

The film-like heat shielding material obtained above was evaluated as in Example 1. The material reveals a visible light transmission of 75% and a solar radiation transmittance of 57%. It has now been found that the material can sufficiently transmit the light in a visible light region, and concurrently, can screen about 43% of direct incident light from sunrays, thus achieving a high level of heat shielding effect. Additionally, the transmittances in an ultraviolet region are 0% at a wavelength of 290 nm and 22% at a wavelength of 320 nm. The transmittance of 0% read at 290 nm is attributable to the consequence of the PET resin used as the base resin. Further, the haze value is 1.0% which is comparable to so greatly high a transparency that the indoor condition of the facility is clearly observed even from the outside.

### INDUSTRIAL APPLICABILITY

As stated and shown above, the heat shielding material for use in an agricultural and horticultural facility according to the present invention is not only excellent in weather resistance, but also capable of sufficiently transmitting the light in a visible light region required for field work and plant growth in the facility, and at the same time, is capable of efficiently absorbing or screening near-infrared light, thus exerting a high level of heat shielding effect. Further, it enables moderate or controlled transmittance of ultraviolet rays, inhibiting disease and insect damage from occurring, and also permitting insects such as honeybees and the like to work actively as pollinizers. Consequently, the heat shielding material is suitably useful as a roofing material, an outer wall material and so on in an agricultural house and a horticultural house.

## Claims

1. A heat shielding material for use in an agricultural and horticultural facility comprising: a heat shielding layer comprising a base resin; and a heat shielding filler in the form of microparticles kneaded in the base resin, the heat shielding layer having been formed like a single film or board,
wherein the base resin in the heat shielding layer is fluorine type resin; the heat shielding filler is at least one selected from lanthanum hexaboride and antimony-doped tin oxide; and the heat shielding filler is present in the heat shielding layer in a content set within the range of 0.01 to 1 g/m² in the case of lanthanum hexaboride and within the range of 1.0 to 50 g/m² in the case of antimony-doped tin oxide and wherein the heat shielding material for use in an agricultural and horticultural facility has a visible light transmittance in the range of 60 to 90%, a solar radiation transmittance in the range of 10 to 80%, a light transmittance in the range of 5 to 80% at a wavelength of 320 nm in an ultraviolet region, and light transmittance in the range of 3.4 to 70% at a wavelength of 290 nm in an ultraviolet region.

2. A heat shielding material for use in an agricultural and horticultural facility comprising: a heat shielding layer comprising a base resin; and a heat shielding filler in the form of microparticles kneaded in the base resin, the heat shielding layer having been formed like a single film or board and having been laminated on the surface of a film-or board-like matrix material, or interposed between two such matrix materials,
wherein the base resin in the heat shielding layer is fluorine type resin; the heat shielding filler is at least one selected from lanthanum hexaboride and antimony-doped tin oxide; and the heat shielding filler is present in the heat shielding layer in a content set within the range of 0.01 to 1 g/m² in the case of lanthanum hexaboride and within the range of 1.0 to 50 g/m² in the case of antimony-doped tin oxide, and wherein the heat shielding material for use in an agricultural and horticultural facility has a visible light transmittance in the range of 60 to 90%, a solar radiation transmittance in the range of 10 to 80%, a light transmittance in the range of 5 to 80% at a wavelength of 320 nm in an ultraviolet region, and light transmittance in the range of 3.4 to 70% at a wavelength of 290 nm in an ultraviolet region.

## Patentansprüche

1. Wärmeabschirmmaterial zur Verwendung in einer Agrar- und Gartenbaueinrichtung, das umfasst: eine wärmeabschirmende Schicht, umfassend ein Grundharz; und einen wärmeabschirmenden Füllstoff in der Form von Mikroteilchen, die in dem Grundharz eingeknetet sind, wobei die wärmeabschirmende Schicht wie ein einfacher Film oder eine Platte gebildet worden ist,
wobei das Grundharz in der wärmeabschirmenden Schicht ein Harz vom Fluortyp ist; der wärmeabschirmende Füllstoff zumindest einer ausgewählt aus Lanthanhexaborid und mit Antimon dotiertem Zinnoxid ist; und der wärmeabschirmende Füllstoff in der wärmeabschirmenden Schicht in einem Gehalt vorhanden ist, der innerhalb des Bereichs von 0,01 to 1 g/m² im Fall vom Lanthanhexaborid und innerhalb eines Bereichs von 1,0 to 50 g/m² im Fall von mit Antimon dotiertem Zinnoxid eingestellt ist, und wobei das wärmeabschirmende Material zur Verwendung in einer Agrar- und Gartenbaueinrichtung eine Durchlässigkeit für sichtbares Licht in dem Bereich von 60 bis 90% aufweist, eine Durchlässigkeit für Sonnenstrahlung in dem Bereich von 10 bis 80% aufweist, eine Lichtdurchlässigkeit in dem Bereich von 5 bis 80% bei einer Wellenlänge von 320 nm in einem Ultraviolettbereich aufweist, und eine Lichtdurchlässigkeit in dem Bereich von 3,4 bis 70% bei einer Wellenlänge von 290 nm in einem Ultraviolettbereich aufweist.

2. Wärmeabschirmmaterial zur Verwendung in einer Agrar- und Gartenbaueinrichtung, das umfasst: eine wärmeabschirmende Schicht, umfassend ein Grundharz; und einen wärmeabschirmenden Füllstoff in der Form von Mikroteilchen, die in dem Grundharz eingeknetet sind, wobei die wärmeabschirmende Schicht wie ein einfacher Film oder eine Platte gebildet worden ist, und die auf die Oberfläche eines film- oder plattenartigen Matrixmaterials laminiert worden ist oder zwischen zwei solchen Matrixmaterialien zwischengelagert worden ist,
wobei das Grundharz in der wärmeabschirmenden Schicht ein Harz vom Fluortyp ist; der wärmeabschirmende Füllstoff zumindest einer ausgewählt aus Lanthanhexaborid und mit Antimon dotiertem Zinnoxid ist; und der wärmeabschirmende Füllstoff in der wärmeabschirmenden Schicht in einem Gehalt vorhanden ist, der innerhalb des Bereichs von 0,01 to 1 g/m² im Fall vom Lanthanhexaborid und innerhalb des Bereichs von 1,0 to 50 g/m² im Fall von mit Antimon dotiertem Zinnoxid eingestellt ist, und wobei das wärmeabschirmende Material zur Verwendung in einer Agrar- und Gartenbaueinrichtung eine Durchlässigkeit für sichtbares Licht in dem Bereich von 60 bis 90% aufweist, eine Durchlässigkeit für Sonnenstrahlung in dem Bereich von 10 bis 80% aufweist, eine Lichtdurchlässigkeit in dem Bereich von 5 bis 80% bei einer Wellenlänge von 320 nm in einem Ultraviolettbereich aufweist, und eine Lichtdurchlässigkeit in dem Bereich von 3,4 bis 70% bei einer Wellenlänge von 290 nm in einem Ultraviolettbereich aufweist.

## Revendications

1. Matériau de protection thermique pour une utilisation dans une installation agricole et horticole comprenant :
une couche de protection thermique comprenant une résine de base ; et
une charge de protection thermique sous la forme de microparticules pétries dans la résine de base, la couche de protection thermique ayant été formée comme un film unique ou un panneau,
dans lequel la résine de base dans la couche de protection thermique est une résine de type fluorée ;
la charge de protection thermique est au moins une matière choisie parmi l'hexaborure de lanthane et l'oxyde d'étain dopé à l'antimoine ; et
la charge de protection thermique est présente dans la couche de protection thermique en une teneur définie dans la plage allant de 0,01 à 1 g/m² dans le cas de l'hexaborure de lanthane et dans la plage allant de 1,0 à 50 g/m² dans le cas de l'oxyde d'étain dopé à l'antimoine, et où le matériau de protection thermique pour une utilisation dans une installation agricole et horticole a une transmittance de lumière visible dans la plage allant de 60 à 90%, une transmittance de rayonnement solaire dans la plage allant de 10 à 80%, une transmittance de lumière dans la plage allant de 5 à 80% à une longueur d'onde de 320 nm dans une région de l'ultraviolet, et une transmittance de lumière dans la plage allant de 3,4 à 70% à une longueur d'onde de 290 nm dans une région de l'ultraviolet.

2. Matériau de protection thermique pour une utilisation dans une installation agricole et horticole comprenant :
une couche de protection thermique comprenant une résine de base ; et
une charge de protection thermique sous la forme de microparticules pétries dans la résine de base, la couche de protection thermique ayant été formée comme un film unique ou un panneau et ayant été stratifiée sur la surface d'un matériau de matrice en forme de film ou panneau, ou interposée entre deux de ces matériaux de matrice,
dans lequel la résine de base dans la couche de protection thermique est une résine de type fluorée ;
la charge de protection thermique est au moins un élément choisi parmi l'hexaborure de lanthane et l'oxyde d'étain dopé à l'antimoine ; et
la charge de protection thermique est présente dans la couche de protection thermique en une teneur définie dans la plage allant de 0,01 à 1 g/m² dans le cas de l'hexaborure de lanthane et dans la plage allant de 1,0 à 50 g/m² dans le cas de l'oxyde d'étain dopé à l'antimoine, et où le matériau de protection thermique pour une utilisation dans une installation agricole et horticole a une transmittance de lumière visible dans la plage allant de 60 à 90%, une transmittance de rayonnement solaire dans la plage allant de 10 à 80%, une transmittance de lumière dans la plage allant de 5 à 80% à une longueur d'onde de 320 nm dans une région de l'ultraviolet, et une transmittance de lumière dans la plage allant de 3,4 à 70% à une longueur d'onde de 290 nm dans une région de l'ultraviolet.
